# EUROPEAN PATENT APPLICATION

(11) **EP 2 330 545 A1**
(43) Date of publication of application: **08.06.2011**
(21) Application number: 09178170.8
(22) Date of filing: 07.12.2009
(51) Int. Cl.: G06Q 10/00

(54) **Method and apparatus for adjusting reminder data stored in a database**

(71) Applicant: Research in Motion Corporation, Wilmington DE 19801 (US)
(72) Inventor: Diaz, Roberto, Rolling Meadows, IL 60008 (US)
(74) Representative: Reichl, Wolfgang

(57) **Abstract**

A method and apparatus for adjusting reminder data stored in a database when a third event is inserted between two existing events is provided. Third event data is received, representative of a third event occurring between the first event and the second event, the third event data associated with third location data. A first time period for travelling between the first event and the third event and a second time period for travelling between the third event and the second event are determined, using the locations of each event. Third event reminder data is generated for storage in the database from a third event start time and the first time period. Second event reminder data, stored in the database, is adjusted using the second time period, the second event reminder data originally determined from a second event start time and a time period for travelling between the first event and the second event using first location data and second location data.

## Description

### FIELD

The specification relates generally to databases, and specifically to a method and apparatus for adjusting reminder data stored in a database.

### BACKGROUND

Currently, reminders are fixed-time-based. While solutions exist that determine reminders based on time to travel between locations and/or traffic patterns, there is no solution for adjusting reminder data stored in a database when events are added to the database, the events added or moved between two already scheduled events.

### SUMMARY

When a new event is added to a database between two existing caledar events, reminder data must be adjusted manually. Aside from the inconvenience, undue processing demand is placed on the computing device when reminder data for the later of the two existing events is retrieved and adjusted manually. In addition, with mobile computing devices, such as PDA's (Personal Digital Assistants) etc., this can result in fumbling with the PDA while driving, which can further cause accidents, etc. as well as introduce a risk of dropping the PDA and/or incorrectly adjusting the reminder data as attention is unfocussed. Undue use of computing resources at the computing device are also introduced as the reminder data is manually retrieved via an input device, placing stress on the input device, as well as overuse of resources associated with a display device, such as a display cache. Similarly, when an event is removed, then the reminder data has to again be manually adjusted.

A first aspect of the specification provides method for adjusting reminder data stored in a database comprising first event data representative of a first event and second event data representative of a second event occurring after the first event, the first event data associated with first location data, and the second event data associated with second location data and second event reminder data stored in the database. The method is implementable in a computing device comprising a processing unit. The method comprises receiving, at the processing unit, third event data representative of a third event occurring between the first event and the second event, the third event data associated with third location data. The method further comprises determining a first time period for travelling between the first event and the third event and a second time period for travelling between the third event and the second event, using the first location data, the third location data and the second location data. The method further comprises generating, at the processing unit, third event reminder data for storage in the database from a third event start time and the first time period. The method further comprises adjusting, at the processing unit, the second event reminder data using the second time period, the second event reminder data originally determined from a second event start time and a time period for travelling between the first event and the second event using the first location data and the second location data.

The method can further comprise adjusting at least one of the third event reminder data and the second event reminder data using cushion time period data such that an estimated arrival time occurs prior to a start time for at least one of the third event and second event.

Receiving third event data can occur via at least one of an input device and a communication interface associated with the computing device.

Determining the first time period and the second time period can comprise: querying a server, via a communication interface associated with the computing device, using the first location, the second location and the third location, the server enabled to determine travel times between locations; and receiving the first time period and the second time period from the server.

Generating the third event reminder data for storage in the database can comprise subtracting the first time period from the third event start time to determine a third event reminder time.

Adjusting the second event reminder data can comprise subtracting the second time period from the second event start time to determine a second event reminder time to replace an old second event reminder time.

The method can further comprise providing at least one of the third event reminder data at a third event reminder time and the second event reminder data at a second event reminder time at an output device associated with the computing device, the output device controlled by the processing unit.

The method can further comprise storing the third event reminder data in the database.

The database can be stored in a memory device associated with the computing device.

The method can further comprise adjusting at least one of the third event reminder data and the second event reminder data based on at least one of a current location and traffic patterns. The current location can be determined using at least one of a locating device for locating said computing device, a GPS (Global Positioning System) device, and wireless network triangulation.

A second aspect of the specification provides a computing device for adjusting reminder data stored in a database comprising first event data representative of a first event and second event data representative of a second event occurring after the first event, the first event data associated with first location data, and the second event data associated with second location data and second event reminder data stored in the database. The computing device comprises a processing unit interconnected with an output device, a memory device and a communication interface. The processing unit is enabled to receive third event data representative of a third event occurring between the first event and the second event, the third event data associated with third location data. The processing unit is further enabled to determine a first time period for travelling between the first event and the third event and a second time period for travelling between the third event and the second event, using the first location data, the third location data and the second location data. The processing unit is further enabled to generate third event reminder data for storage in the database from a third event start time and the first time period. The processing unit is further enabled to adjust the second event reminder data, stored in the database, using the second time period, the second event reminder data originally determined from a second event start time and a time period for travelling between the first event and the second event using the first location data and the second location data.

The processing unit can be further enabled to adjust at least one of the third event reminder data and the second event reminder data using cushion time period data such that an estimated arrival time occurs prior to a start time for at least one of the third event and second event.

The processing unit can be further enabled to receive the third event data, via at least one of an input device associated with the computing device, and the communication interface.

The processing unit can be further enabled to determine the first time period and the second time period by: querying a server, via the communication interface, using the first location, the second location and the third location, the server enabled to determine travel times between locations; and receiving the first time period and the second time period from the server.

The processing unit can be further enabled to generate the third event reminder data for storage in the database subtracting the first time period from the third event start time to determine a third event reminder time.

The processing unit can be further enabled to adjust the second event reminder data by subtracting the second time period from the second event start time to determine a second event reminder time to replace an old second event reminder time.

The processing unit can be further enabled to provide at least one of the third event reminder data at a third event reminder time and the second event reminder data at a second event reminder time at an output device associated with the computing device, the output device controlled by the processing unit.

The processing unit can be further enabled to store the third event reminder data in the database.

The database can be stored in the memory device.

The processing unit can be further enabled to adjust at least one of the third event reminder data and the second event reminder data based on at least one of a current location and traffic patterns. The current location can be determined using at least one of a locating device for locating said computing device, a GPS (Global Positioning System) device, and wireless network triangulation.

A third aspect of the specification provides a computer program product, comprising a computer usable medium having a computer readable program code adapted to be executed to implement a method for adjusting reminder data stored in a database comprising first event data representative of a first event and second event data representative of a second event occurring after the first event, the first event data associated with first location data, and the second event data associated with second location data and second event reminder data stored in the database. The method is implementable in a computing device comprising a processing unit. The method comprises receiving, at the processing unit, third event data representative of a third event occurring between the first event and the second event, the third event data associated with third location data. The method further comprises determining a first time period for travelling between the first event and the third event and a second time period for travelling between the third event and the second event, using the first location data, the third location data and the second location data. The method further comprises generating, at the processing unit, third event reminder data for storage in the database from a third event start time and the first time period. The method further comprises adjusting, at the processing unit, the second event reminder data, stored in the database, using the second time period, the second event reminder data originally determined from a second event start time and a time period for travelling between the first event and the second event using the first location data and the second location data.

### BRIEF DESCRIPTIONS OF THE DRAWINGS

Embodiments are described with reference to the following figures, in which:
Fig. 1 depicts a block diagram system comprising a computing device for adjusting reminder data stored in a database, according to non-limiting embodiments;
Fig. 2 depicts a method for adjusting reminder data stored in a database, according to non-limiting embodiments;
Fig. 3 depicts a block diagram system comprising a computing device for adjusting reminder data stored in a database, according to non-limiting embodiments;
Fig. 4 depicts a representation of data for scheduling an event, including a field for receipt of location data, according to non-limiting embodiments;
Fig. 5 depicts a representation of a representation of a warning that a location cannot for determined from location data received in the representation of Fig. 5, according to non-limiting embodiments;
Fig. 6 depicts a representation of data for scheduling an event, including a field for receipt of location data and a field for receipt of cushion time period data, according to non-limiting embodiments; and
Fig. 7 depicts a block diagram system comprising a computing device for adjusting reminder data stored in a database, according to non-limiting embodiments.

### DETAILED DESCRIPTION OF THE EMBODIMENTS

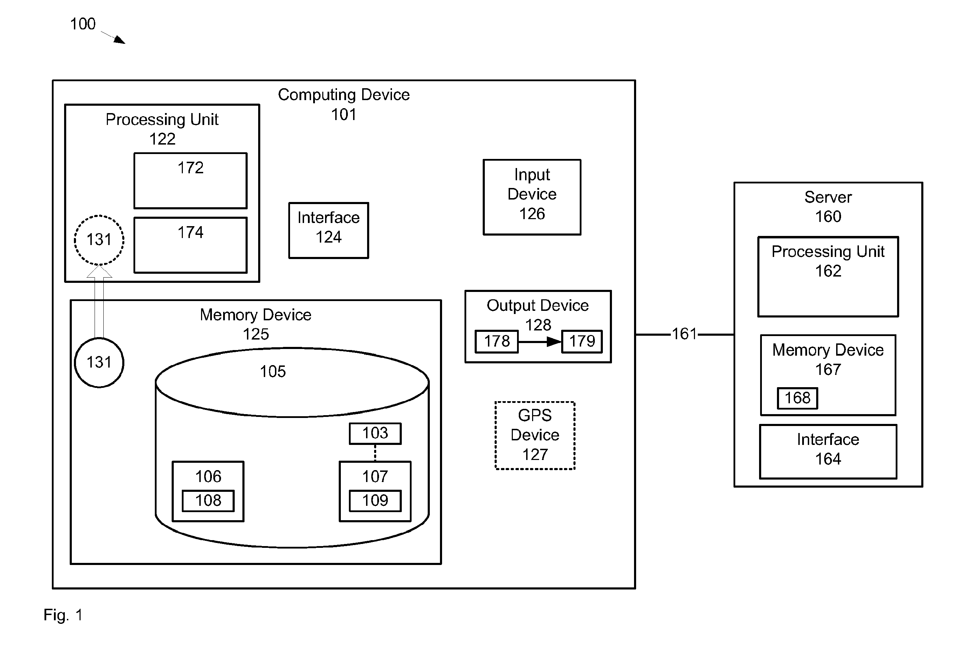

Fig. 1 depicts a system 100 comprising a computing device 101 for adjusting reminder data 103 stored in a database 105, according to non-limiting embodiments. In general, database 105 comprises event data including but not limited to first event data 106, representative of a first event, and second event data 107, representative of a second event. In some embodiments, database 105 can comprise a calendar database. It is understood that reminder data 103 is associated with second event data 107 in that reminder data 103 comprises data for providing a reminder of the second event data at a second event reminder time. As will be described in more detail below, the first event occurs before the second event, and further each of the first event and the second event are scheduled to occur at a first location and a second location respectively. Hence, it will take a time period to travel from the first location to the second location when both events are to be attended. Furthermore, each of first event data 106 and second data 107 can be respectively associated with first location data 108 and second location data 109, each respectively identifying a location of the first event and the second event.

Computing device 101 comprises a processing unit 122, a communications interface 124 and memory device 125 all in communication, for example, via a computing bus (not depicted). In some embodiments, computing device 101 is further enabled to determine a location of computing device 101. In some of these embodiments, computing device 101 further comprises any suitable location device for locating computing device 101. In example embodiments described herein, computing device 101 can comprise a GPS (Global Positioning System) device 127 from which the current location of computing device 101 can be determined, for example via a suitable interaction between processing unit 122 and GPS device 127. However, in other embodiments, computing device 101 can be enabled to determine its location using triangulation with a wireless network.

In example embodiments described herein, computing device 101 further comprises an input device 126 and an output device 128. In other example embodiments, at least one of input device 126 and output device 128 can be external to computing device 101, e.g. when computing device 101 comprises a personal computer; in these embodiments, computing device 101 is in communication with input device 126 and output device 128 via any suitable wired or wireless link.

Computing device 101 further comprises an application 131 stored in memory device 125 and processable by processing unit 122. In particular, application 131 comprises an application for adjusting reminder data 103 stored in database 105, as described below.

System 100 can further comprise a server 160 in communication with computing device 101 via a link 161. Server 161 is generally enabled to determine travel time between locations. Link 161 can comprise any suitable combination of wired or wireless networks as desired, including but not limited to a packet based network, the Internet, an analog network, the PSTN (Public Switched Telephone Network), a WiFi network, a WiMax network and the like.

Computing device 101 comprises any suitable computing device for controlling output device 128 to provide event reminder data at an event reminder time, and for processing application 131. Computing device 101 can include but is not limited to any suitable combination of a desktop computer, a laptop or notebook computer, a PDA, a cellular or mobile phone, a portable electronic device, or the like. Other suitable types of computing devices are within the scope of present embodiments. Memory device 125 can be any suitable one of or combination of volatile memory, non-volatile memory, RAM (random access memory), ROM (read only memory), hard drive, optical drive, or the like.

In particular, memory device 125 can store database 105. However, in other embodiments, database 105 can be stored external to computing device 101, for example at a remote computing device accessible to computing device 101 via a communication network (not depicted).

Processing unit 122 can comprise any suitable processor, or combination of processors, including but not limited to a microprocessor, CPU (central processing unit), or the like. Processing unit 122 can comprise a comparator 172 for comparing values including but not limited to alphanumeric values, and a calculator 174 for performing mathematical operations on numerical values and/or performing textual operations on text values.

Communications interface 124 is enabled to communicate with server 160 via link 161 and other computing devices and/or communication devices via a communications network (not depicted), for example to transmit and receive event data, e-mail, messages, attachments, and the like. Accordingly, communications interface 124 is enabled to communicate according to any suitable protocol which is compatible with link 161 and/or a suitable communications network, including but not limited to packet based protocols, Internet protocols, analog protocols, cell phone protocols (1X, UMTS (Universal Mobile Telecommunications System), CDMA (Code Division Multiple Access), GSM (Global System for Mobile communications), and the like), WiFi protocols, WiMax protocols and/or a combination of these. Other suitable protocols are within the scope of present embodiments. In embodiments where input device 126 and output device 128 are external to computing device 101, communications interface 124 is further enabled to communicate with input device 126 and output device 128, either wired or wirelessly as desired, via any suitable protocol.

Input device 126 is generally enabled to receive input data, and can comprise any desired one of or combination of suitable input devices, including but not limited to a keyboard or keypad, a pointing device, a mouse, a trackball, a thumbwheel, a touchpad, a touch screen or the like.

Output device 128 can comprises any suitable output device including but not limited to any suitable display device and/or speakers and/or intermittent lights (e.g. a blinking LED (light emitting diode)) and the like. Embodiments where output device comprises a display device are described hereafter. In these embodiments, output device comprises circuitry 178 for generating a representation 179 of application 131 and/or reminder data 103. Hence, output device 128 can include any one of or suitable combination of CRT (cathode ray tube) and/or flat panel displays (e.g. LCD (liquid crystal display), OLED (organic light emitting diode), plasma, touchscreen displays and the like). In some embodiments output device 128 can comprise more than one display device. Circuitry 178 can include any suitable circuitry for controlling the CRT and/or flat panel displays etc., including but not limited to display buffers, transistors, electron beam controllers, LCD cells, plasmas cells, phosphors etc. In particular, output device 128 and circuitry 178 can be controlled by processing unit 122 to generate representation 179.

In examples of non-limiting embodiments, database 105 can comprise the contents of Table 1, Table 1 comprising events scheduled on a given day:

**Table 1**

| Date | Wednesday, September 16, 2009 |
|---|---|
| 8:00a | |
| 9:00a | Sales Call at Acme Limited (e.g. first event data 106) |
| 10:00a | |
| 11:00a | |
| 12:00p | |
| 1:00p | Sales Call at Goliath National Limited (e.g. second event data 107) |
| 2:00p | |
| 3:00p | |
| 4:00p | |
| 5:00p | |

Though Table 1 is presented in cells arranged in rows and columns, it is understood that database 105, and/or any subset thereof, can be stored in any suitable format. In any event, Table 1 comprises a cell representing a date of the events in Table 1 ("Wednesday, September 16, 2009"). Table 1 further comprises a column comprising times of the day ("8:00a, 9:00a, ..., 5:00p"), and an adjacent column comprising each event which occurs at a respective time. For example, "Sales Call at Acme Limited" is to occur at 9:00a, and is a first event associated with first event data 106; "Sales Call at Goliath National Limited" is to occur at 1:00p, and is a second event, associated with second event data 107, following the first event. It is understood that events can occur before the earliest time listed in Table 1 and/or after the latest time listed in Table 1 as desired. In some embodiments, one or both of the first and second events can be recurring events.

In addition, each of first event data 106 and second event data 107 comprises respective data pertaining to details of each associated event. For example, first event data 106 can comprise the contents of Table 2:

**Table 2**

| | |
|---|---|
| Event | Sales Call at Acme Limited |
| Reference Number | 106 |
| Date | Wednesday, September 16, 2009 |
| Start Time | 9.00a |
| End Time | 10.00a |
| Attendees | John Doe, Nigel Jones |
| Location | 123 West Ave, Toronto, Ontario (e.g. first location data 108) |

Though Table 2 is presented in cells arranged in rows and columns, it is understood that first event data 106 can be stored in any suitable format. Table 2 comprises a column comprising identifiers of information associated with events, and an adjacent column comprising information specific to the first event, including an event title ("Sales Call at Acme Limited"), an optional reference number ("106"), a date of the event ("Wednesday, September 16, 2009"), a start time ("9.00a"), an end time ("10.00a"), and attendees ("John Doe, Nigel Jones"). In particular, Table 2 comprises first location data 108 identifying the location of the first event ("123 West Ave, Toronto, Ontario"). First location data 108 enables server 160 to find the location of the first event such that a travel to or from the location can be determined, given other location data. Hence, first location data 108 can comprise a street address, a name of a business, a name of a building, geographic coordinates (e.g. longitude/latitude), and the like. In some embodiments, the type of location data specified can depend on server 160, as described below.

Similarly, second event data 107 can comprise the contents of Table 3:

**Table 3**

| | |
|---|---|
| Event | Sales Call at Goliath National Limited |
| Reference Number | 107 |
| Date | Wednesday, September 16, 2009 |
| Start Time | 1.00p |
| End Time | 2.00p |
| Attendees | Jim Orwell, Sandra Anderson |
| Location | 1256 East Ave, Whitby, Ontario (e.g. second location data 109) |

Though Table 3 is presented in cells arranged in rows and columns, it is understood that second event data 107 can be stored in any suitable format, which can be the same or different as the format of first event data 106. Table 3 comprises a column comprising identifiers of information associated with events, and an adjacent column comprising information specific to the second event, including an event title ("Sales Call at Goliath National Limited"), an optional reference number ("107"), a date of the event ("Wednesday, September 16, 2009"), a start time ("1.00p"), an end time ("2.00a"), and attendees ("Jim Orwell, Sandra Anderson"). In particular, Table 3 comprises second location data 109 identifying the location of the second event ("1256 East Ave, Whitby, Ontario"). Second location data 109 enables server 160 to find the location of the second event such that a travel to or from the location can be determined, given another location, for example first location data 108 in Table 2. Hence, second location data 109 can comprise a street address, a name of a business, a name of a building, geographic coordinates (e.g. longitude/latitude), and the like. In some embodiments, the type of location data specified can depend on server 160, as described below.

Server 160 comprises a processing unit 162, a communication interface 164, and a memory device 167, all in communication, for example, via a computing bus (not depicted). Each of processing unit 162, communication interface 164, and memory device 167 can be respectively similar to processing unit 122, communication interface 124, and memory device 125 described above. It is understood that communication interface 124 is further enabled to communicate with computing device 101 via link 161 via any suitable combination of wired and wireless protocols, similar to communication interface 124.

In particular, server 160 is enabled to determine travel time between locations. For example server 160 can comprise any suitable map server storing map data 168. In general, first location data 108 and second location data 109 are compatible with server 160 and map data 168 in that given first location data 108 and second location data 109, server 160 can determine the travel time between the first location and the second location using any suitable method. In general, server 160 determines a travel time based on a distance between the first location and the second location, for example a shortest distance and/or a distance having the shortest travel time. In other embodiments, server 160 can determine the travel time based on traffic conditions between the first location and the second location; in these embodiments, server 160 can be enabled to communicate with a traffic server (not depicted) which determines traffic conditions in given locations, and transmits traffic conditions in the form of traffic data, including but not limited to accident data, to server 160, either upon request and/or as changes occur and/or on a periodic basis.

In some embodiments, the functionality of server 160 can be combined with computing device 101, using the resources of computing device 101. In these embodiments, computing device 101 comprise map data 168.

In some embodiments, traffic data can be broadcast or transmitted directly to computing device 101, and travel time can be adjusted at computing device 101 based on the received traffic data. For example, traffic data can be transmitted directly to AM/FM/SAT radios and/or GPS device 127; hence, in some of these embodiments, computing device 101 can further comprise a suitable AM/FM/SAT radio.

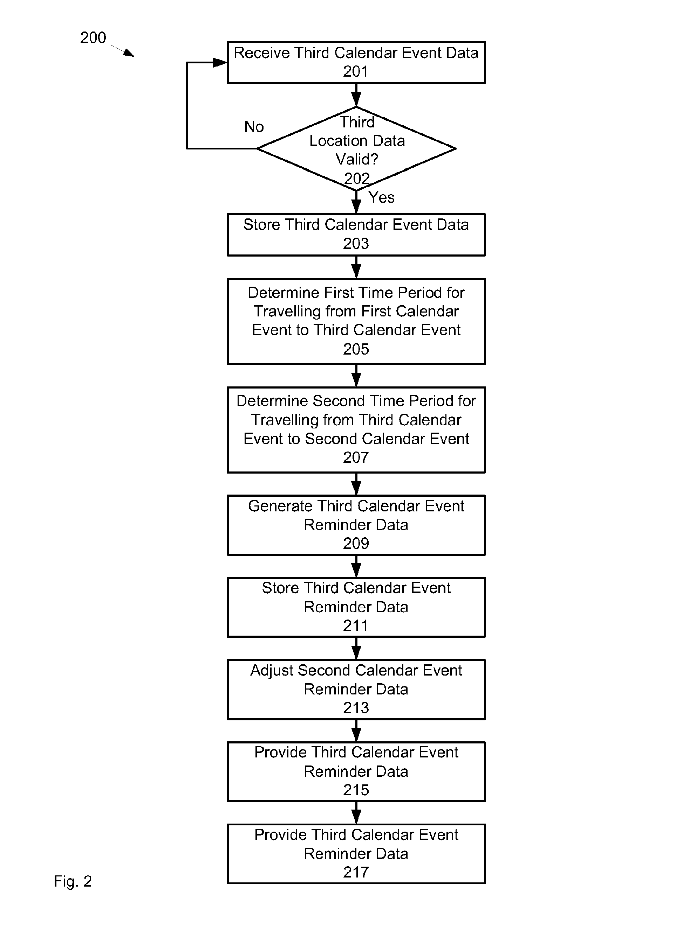

Attention is now directed to Fig. 2 which depicts a method 200 for adjusting reminder data stored in a database. In order to assist in the explanation of method 200, it will be assumed that method 200 is performed using system 100. Furthermore, the following discussion of method 200 will lead to a further understanding of system 100 and its various components. However, it is to be understood that system 100 and/or method 200 can be varied, and need not work exactly as discussed herein in conjunction with each other, and that such variations are within the scope of present embodiments.

In method 200 it is understood that database 105 comprises first event data 106, representative of a first event, and second event data 107, representative of a second event occurring after the first event. For example, each of first event data 106 and second event data 107 can have been added to database 105 via receipt of input data from input device 126 and/or receipt of event data via communication interface 124 (e.g. when an event invitation is received from another computing device (not depicted), in communication with computing device 101 via a communication network). Furthermore, it is understood that first event data 106 is associated with first location data 108, and second event data 107 is associated with second location data 109 and second event reminder data 103, stored in the database 105, as described above.

It is further understood that second event reminder data 103 was determined from a second event start time (e.g. 1.00p from Table 2) and a time period for travelling between the first event and the second event, the time period determined using first location data 108 and second location data 109. For example, second event reminder data 103 can be determined by transmitting first location data 108 and second location data 109 to server 108, receiving the time period for travelling between the two locations and subtracting the time period from the start time of the second event. Second reminder event data 103 can then be provided at a second event reminder time that allows arrival at the second location in time for the second event. For example, if the time to travel between the first location and the second location is 1 hour, 15 minutes, and the second event starts at 1.00p, the second event reminder time can be 11:45a. It is furthermore understood that method 200 can be implemented in computing device 101, for example upon processing of application 131 by processing unit 122.

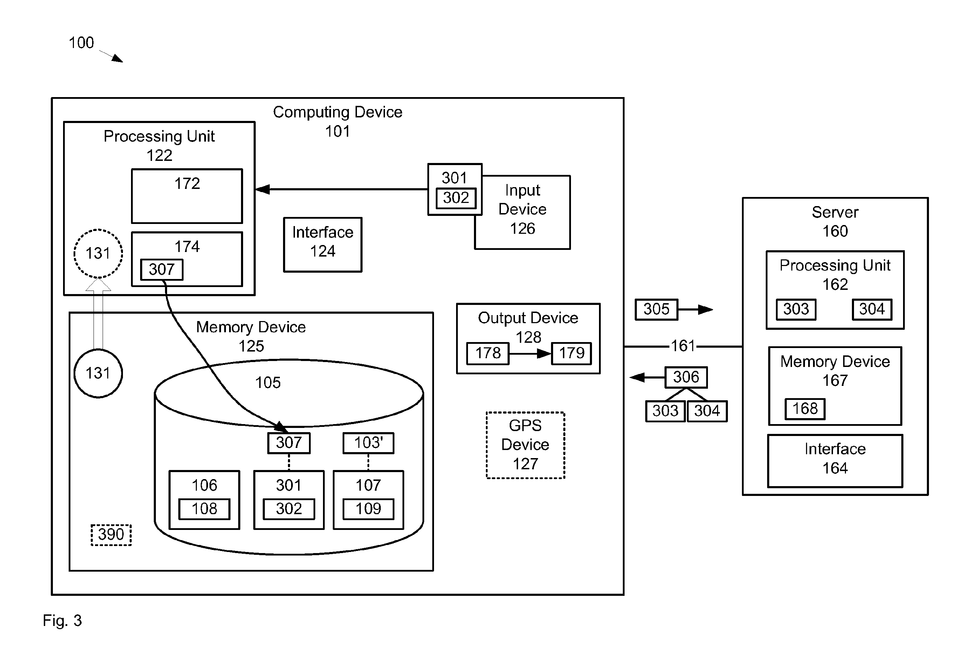

At step 201 third event data 301 is received, as depicted in Fig. 3, substantially similar to Fig. 1, with like elements having like numbers. Third event data 301 can be received via at least one of input device 126 (as depicted) and communication interface 124. It is understood that third data 301 is representative of a third event occurring between the first event and the second event. It is further understood that third event data 301 is associated with third location data 302 identifying a location of the third event. For example, third second event data 301 can comprise the contents of Table 4:

**Table 4**

| | |
|---|---|
| Event | Early Lunch Meeting International Computing Devices |
| Reference Number | 301 |
| Date | Wednesday, September 16, 2009 |
| Start Time | 11.00a |
| End Time | 12.00p |
| Attendees | Bill Robertson, Edward Thompson |
| Location | 234 North Ave, Thornhill, Ontario (e.g. third location data 302) |

Though Table 4 is presented in cells arranged in rows and columns, it is understood that third event data 301 can be stored in any suitable format, which can be the same or different as the format of first event data 106 and second event data 107. Table 4 comprises a column comprising identifiers of information associated with events, and an adjacent column comprising information specific to the second event, including an event title ("Early Lunch Meeting International Computing Devices"), an optional reference number ("301"), a date of the event ("Wednesday, September 16, 2009"), a start time ("11.00a"), an end time ("12.00p"), and attendees ("Bill Robertson, Edward Thompson"). In particular, Table 3 comprises third location data 302 identifying the location of the third event ("234 North Ave, Thornhill, Ontario"). Third location data 302 enables server 160 to find the location the third event such that travel to or from the location can be determined, given another location, for example first location data 108 in Table 1 and/or second location data 109 in Table 2. Hence, third location data 302 can comprise a street address, a name of a business, a name of a building, geographic coordinates (e.g. longitude/latitude), and the like. In some embodiments, the type of location data specified can depend on server 160, as described above. In some embodiments, the third event can be a recurring event.

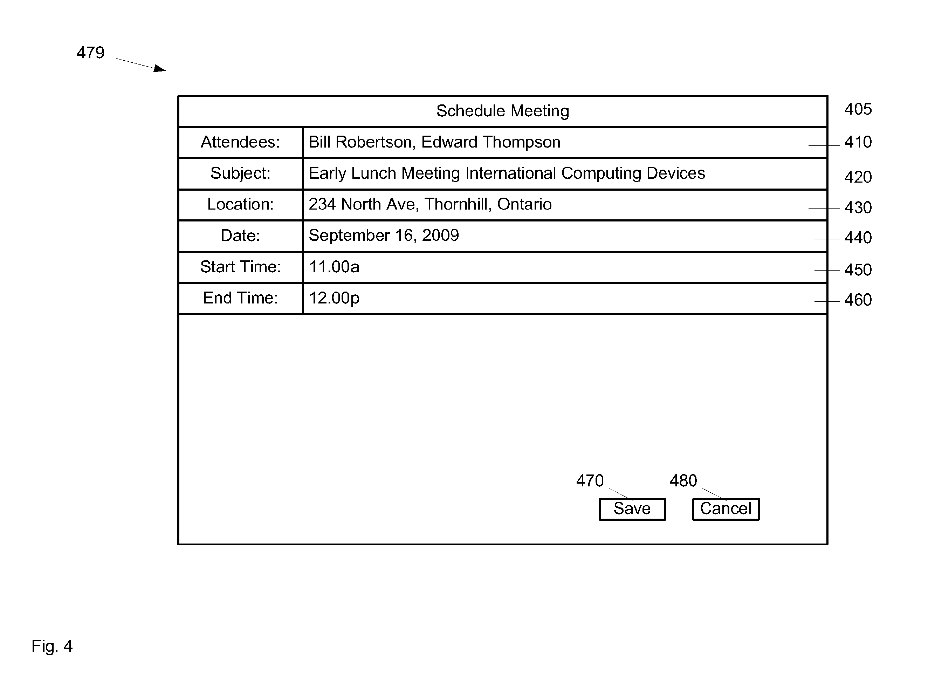

In embodiments where third event data 301 is received via input device 126, third event data 301 can be received in response to processing unit 122 controlling a output device 128 to provide a representation of 459, as depicted in Fig. 4, comprising a view of application 131 in which third event data 301 can be received. In these embodiments, output device 128 comprises a display device. In some embodiments, representation 179 comprises representation 479. In any event, in depicted embodiments representation 479 comprises a header 405 including text data "Schedule Meeting", indicative that an event is being scheduled. In some embodiments, invitees can be selected and/or entered via an optional "Attendee" field 410 and to which a meeting invitation can be transmitted; subject data for the event can be selected and/or entered, as desired, via a "Subject" field 420. Location data for the event can be selected and/or entered (as desired), via a "Location" field 430. In particular, data received in field 430 comprises third location data 302. A date, start and end times for the event can be selected and/or entered via respective "Date", "Start Time" and "End Time" fields 440, 450, 460. It is understood that third event data 301 is generated by processing the data in fields 410-460. In some embodiments, representation 479 further comprises a virtual "Save" button 470 and a virtual "Cancel" button 480. It is understood that when button 470 is activated, third data 301 received via representation 479 is to be saved in database 105 and when button 480 is activated, third data 301 is to be discarded and method 200 ends.

Some embodiments of method 200 comprise an optional step 202 in which third location data 302 is validated. For example, in some embodiments, third location data 302 is checked against a format compatible with server 160 and/or map data 168. Acceptable formats can be stored in memory device 125 as format data 390 and third data 302 can be compared to format data 390 via comparator 174. For example, format data 390 can indicate all formats compatible with server 160 and/or map data 168, e.g. "address, city, state/province" and the like.

In other embodiments, at step 202, third location data 302 is checked to ensure that it be found in map data 168. For example, an address can be received that is formatted correctly but cannot be resolved with map data 168 (e.g. due to an invalid street number, a street that doesn't exist in a given city, etc.). Such a check can include transmission of third location data 302 to server 160 for validation.

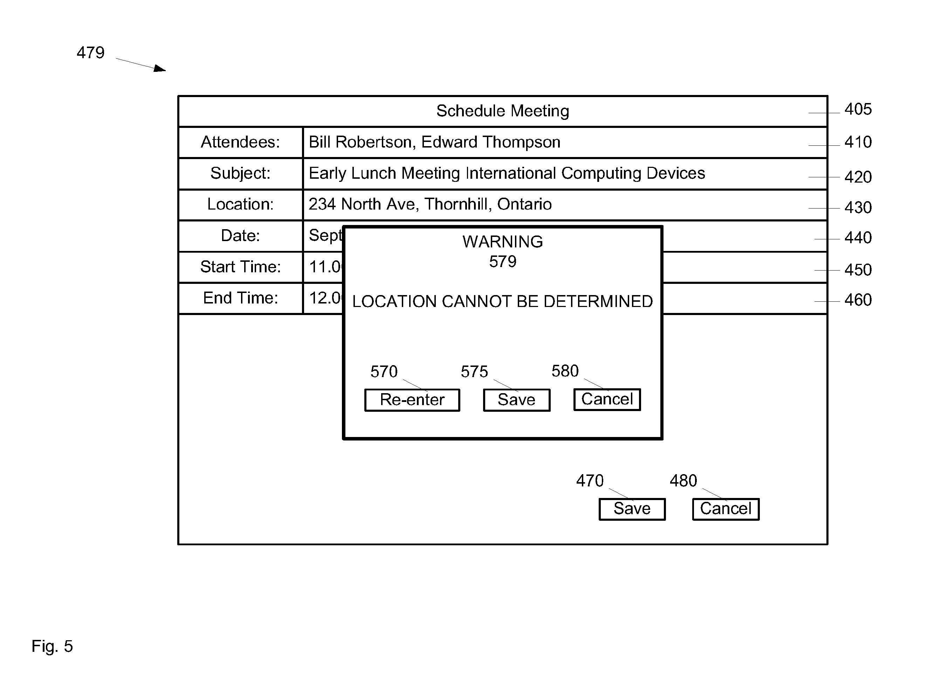

If third location data 302 is not valid (i.e. does not match a format in format data 390 or cannot be found in map data 168), then in some embodiments, step 201 can be repeated such that third event data 301 can be received again until third location data 302 is valid. In some of these embodiments, a processing unit 122 can control output device 128 to provide representation 579, as depicted in Fig. 5, in embodiments where output device 128 comprises a display device. In some embodiments, representation 159 comprises representation 579. Representation 579 indicates that the location cannot be determined, along with virtual buttons 570, 575, 580, for respectively indicating that third location data 302 is to be re-entered, saved anyway or the operation cancelled. When button 570 is activated, then step 201 is repeated. When button 575 is activated, then the third data 301 is stored in database 105 but reminders based on third location data 302 are not determined; in these embodiments, a further representation (not depicted) can be provided which indicates that second reminder data 103 is no longer valid as another event has been scheduled between the first event and the second event. Further representations can be provided such that second reminder data 103 can be manually adjusted. In some embodiments, a reminder associated with the third data 301 can be determined, however not based on location, distance and/or travel time. In these embodiments, a further representation (not depicted) can be provided which indicates that the reminder is not based on location, distance and/or travel time. When button 580 is activated then method 200 ends.

At step 203, third data 301 can be stored in database 105, as depicted in Fig. 3. For example, database 105 can be updated to comprise the contents of Table 5 (by replacing Table 1 or updating Table 1 with the contents of Table 5):

**Table 5**

| | |
|---|---|
| Date | Wednesday, September 16, 2009 |
| 8:00a | |
| 9:00a | Sales Call at Acme Limited (e.g. first event data 106) |
| 10:00a | |
| 11:00a | Early Lunch Meeting International Computing Devices(e.g. third event data 301) |
| 12:00p | |
| 1:00p | Sales Call at Goliath National Limited (e.g. second event data 107) |
| 2:00p | |
| 3:00p | |
| 4:00p | |
| 5:00p | |

Though Table 5 is substantially similar to Table 1, Table 5 comprises a third event, "Sales Call at Goliath National Limited" occurring at 11:00a, associated with third event data 301, the third event occurring between the first and second events. Hence, second reminder data 103 is no longer valid as it is based on the time to travel from the first location to the second location and the start time of the second event. Now the third event is to be attended between the first and second events.

Hence, at step 205, a first time period 303 for travelling between the first event and the third event is determined. And at step 207, a second time period 304 for travelling between the third event and the second event is determined. For example, computing device 101 can query server 160 by sending at least one request 305 to server 160, the at least one request 305 comprising first location data 108, third location data 302 and second location data 109. Server 160 can receive at least one request 305 and determine first time period 303 and second time period 304 and transmit them back to computing device 101 via a response 306 (e.g. as attachments, embedded in response 306, and the like). It is further understood that steps 205 can occur in any suitable order and/or in parallel with each other. In embodiments where computing device 101 comprises the functionality of server 160, processing unit 122 can perform steps 205 and 207 via comparator 172 and calculator 174, for example by comparing first location data 108, third location data 302 and second location data 109 with map data 168, and then calculating the distance between the first location data and the third location, and the distance between the third location and the second location.

At step 209, third event reminder data 307 is generated from a third event start time (e.g. 11.00a) and first time period 303, by processing unit 122, for example via calculator 174. In some embodiments, third event reminder data 307 is generated by subtracting first time period 303 from the third event start time (e.g. 11.00p) to determine a third event reminder time. Hence, the time to travel from the first location to the third location is subtracted from the start time of the third event. For example, if the third event start time is 11.00a, and the first time period 303 is 45 minutes, then the third event reminder time can be 10.15a. It is understood that the third event reminder time can be before, after or at the end time of the first event.

At step 211, third event reminder data 307 is stored in database 105 in association with third event data 301.

At step 213 second event reminder data103 is adjusted using second time period 304. For example, second event reminder data 103 can be adjusted by processing unit 122, e.g. via calculator 174, by subtracting second time period 304 from the second event start time (e.g. 1.00p) to determine a second event reminder time to replace an old second event reminder time. For example, as described above in example embodiments, the old second event reminder time can be 11:45a. If the third event start time is 1.00p, and the second time period 304 is 1 hour 10 minutes, then the new second event reminder time can be 11:50a, which replaces the old second event reminder time of 11:45a. Hence second event data 103 is adjusted to second event data 103', which can be provided at the new second event reminder time. It is understood that the new second event reminder time can be before, after or at the end time of the third event.

In embodiments where one or all of the first event, the second event, and the third event are recurring events, steps 209 through 213 are performed each instance of the recurrence, as required, independent of each of the recurrences.

At step 215, third event reminder data 307 can be provided at a third event reminder time. Similarly, step 217, second event reminder data 103' can be provided at the new second event reminder time. Each of third event reminder data 307 and second event reminder data 103' can be provided at output device 128. For example, processing unit 122 can control output device 128 to provide a representation third event reminder data 307 and second event reminder data 103'. Specifically, when output device 128 comprises a speaker, output device 128 can be controlled to provide an audio representation of third event reminder data 307 and second event reminder data 103', e.g. "Your next appointment starts in 45 minutes with a driving time of 45 minutes" and "Your next appointment starts in 1 hour 10 minutes with a driving time of 1 hour 10 minutes". Alternatively, in embodiments where output device 128 comprise a display device, processing unit 122 can control display device, including circuitry 178 to provide representation 179, which comprises a visual representation of third event reminder data 307 and second event reminder data 103'.

In some embodiments, method 200 can further comprise adjusting at least one of third event reminder data 307 and the event reminder data 103, 103' using cushion time period data such that an estimated arrival time occurs prior to a start time for at least one of the third event and second event. For example, the third event can involve a set-up time of 10 minutes, e.g. to turn on and connect computers, projectors, to arrange a meeting room for a sales presentation, etc., Hence, it can be desirable for an arrival time at the second location to be 10 minutes earlier than a start time of the third event. Hence, in these embodiments, third reminder data 301 is associated with a reminder time determined by subtracting cushion time period data (e.g. 10 minutes) and first time period 303 (e.g. 45 minutes) from the first location to the third location from a start time (11.00a) of the third event (e.g. a reminder time for third reminder data 301 is then 11.00a-45 minutes-10 minutes=10.05a).

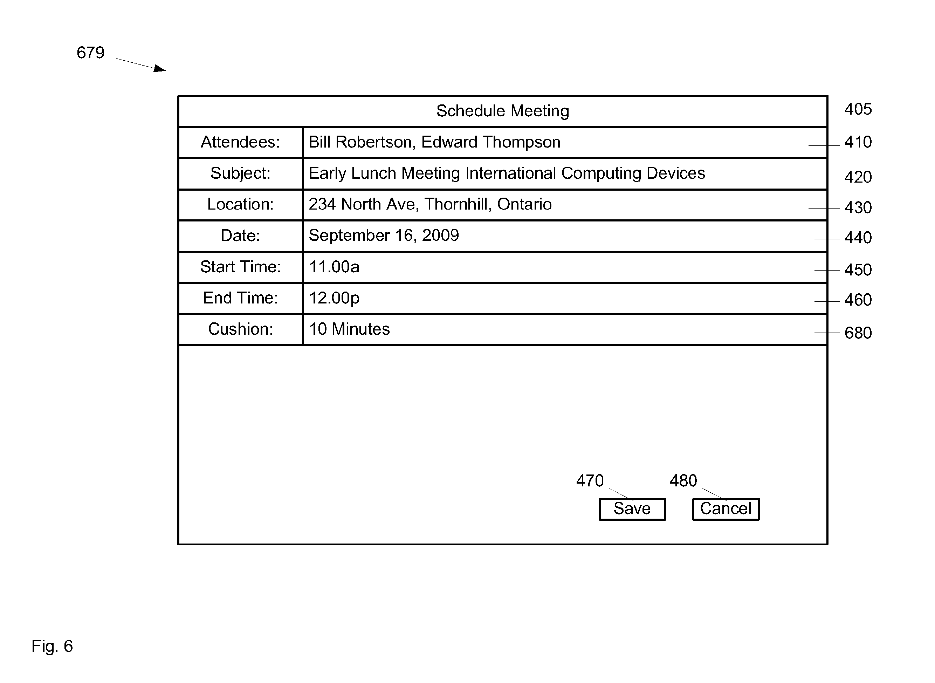

In some embodiments, the cushion time period data can be received via input device 126, for example via processing unit 122 controlling output device 128 to provide a representation 679, as depicted in Fig. 6. Representation 679 is substantially similar to representation 479 except that representation 679 includes a field 680 for receiving the cushion time period data.

It is understood that cushion time period data can be determined for any suitable event data stored in database 105.

In some embodiments, method 200 can further comprise adjusting at least one of third event reminder data 307 and second event reminder data 103, 103' based on at least one of a current location and changes in traffic patterns. In these embodiments method 200 can further comprise determining a current location of computing device 101. For example the current location can be determined using at least one of a location device for locating computing device 101, GPS device 127, and wireless network triangulation.

For example, server 160 can be periodically queried to determine if first time period 303 or second time 304 period has changed, e.g. due to changed in traffic patterns, new construction and the like. The current location of computing device 101 can be transmitted in such a query. Server 160 can respond by re-determining first time period 303 and/or second time period 304 and re-sending a response similar to response 306. Alternatively, server 160 can periodically re-determine first time period 303 or second time period 304 and transmit a message similar to response 306 if a one or both of first time period 303 and second time period 304 changes.

In any event, if one or both of first time period 303 and second time period 304 changes then at least one of third event reminder data 307 and second event reminder data 103, 103' can be adjusted based on the respective changed first time period and/or second time period.

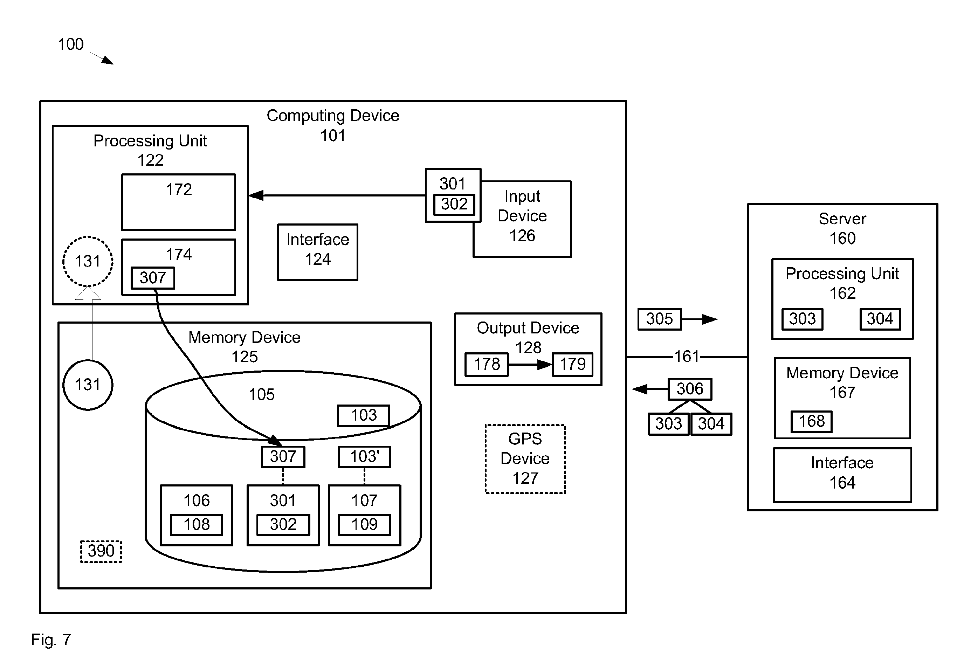

In some embodiments, third event data 301 can be deleted from database 105, for example if the associated event is cancelled. In these embodiments, second event reminder data 103' can be further adjusted for the travel time between the first location and the second location. For example, second event reminder data 103' is restored to the state of second event reminder data 103 before third event data 301 was received. In some of these embodiments, the state of second event reminder data 103 can be stored in database 105, as depicted in Fig. 7 anticipating, for example, the cancellation of third event data 301. Storing the state of second event reminder data 103 reduces bandwidth and use of computing resources at server 160, as if third event data 301 is cancelled, then second event reminder data 103' can be deleted and second event reminder data 103 re-associated with second event data 107, restoring database 105 to the state depicted in Fig. 1. In some of these embodiments, however, server 160 can be queried to determine if the travel time between the first location and the second location has changed and second event reminder data 103 adjusted accordingly.

In any event, automatic adjustment of reminder data when a third event is inserted between two existing events, saves fumbling with a computing device such as a PDA while driving, reduces the risk of accidents, dropping the computing device and/or incorrectly adjusting the reminder data due to unfocussed attention. Such automatic adjustment further serves to reduce the use of computing resources at the computing device, including reducing stress on the input device, as well as overuse of resources associated with an output device, such as a display cache.

Those skilled in the art will appreciate that in some embodiments, the functionality of computing device 101 and server 160 can be implemented using pre-programmed hardware or firmware elements (e.g., application specific integrated circuits (ASICs), electrically erasable programmable read-only memories (EEPROMs), etc.), or other related components. In other embodiments, the functionality of computing device 101 and server 160 can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Alternatively, the computer-readable program code could be stored remotely but transmittable to these components via a modem or other interface device connected to a network (including, without limitation, the Internet) over a transmission medium. The transmission medium can be either a non-wireless medium (e.g., optical and/or digital and/or analog communications lines) or a wireless medium (e.g., microwave, infrared, free-space optical or other transmission schemes) or a combination thereof.

A portion of the disclosure of this patent document contains material which is subject to copyright protection. The copyright owner has no objection to the facsimile reproduction by any one the patent document or patent disclosure, as it appears in the Patent and Trademark Office patent file or records, but otherwise reserves all copyrights whatsoever.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

## Claims

1. A method for adjusting reminder data stored in a database (105) comprising first event data representative of a first event and second event data representative of a second event occurring after said first event, said first event data associated with first location data, and said second event data associated with second location data and second event reminder data stored in said database (105), the method implementable in a computing device (101) comprising a processing unit (122), the method comprising,
receiving, at said processing unit (122), third event data representative of a third event occurring between said first event and said second event, said third event data associated with third location data;
determining a first time period for travelling between said first event and said third event and a second time period for travelling between said third event and said second event, using said first location data, said third location data and said second location data;
generating, at said processing unit (122), third event reminder data for storage in said database (105) from a third event start time and said first time period; and
adjusting, at said processing unit (122), said second event reminder data using said second time period, said second event reminder data originally determined from a second event start time and a time period for travelling between said first event and said second event using said first location data and said second location data.

2. The method of claim 1, further comprising adjusting at least one of said third event reminder data and said second event reminder data using cushion time period data such that an estimated arrival time occurs prior to a start time for at least one of said third event and second event.

3. The method of either of claims 1 and 2, wherein said receiving third event data occurs via at least one of an input device (126) and a communication interface (124) associated with said computing device (101).

4. The method of any of the preceding claims, wherein said determining said first time period and said second time period comprises:
querying a server, via a communication interface (124) associated with said computing device (101), using said first location, said second location and
said third location, said server enabled to determine travel times between locations; and
receiving said first time period and said second time period from said server.

5. The method of any of the preceding claims, wherein said generating said third event reminder data for storage in said database (105) comprises subtracting said first time period from said third event start time to determine a third event reminder time.

6. The method of any of the preceding claims, wherein said adjusting said second event reminder data comprises subtracting said second time period from said second event start time to determine a second event reminder time to replace an old second event reminder time.

7. The method of any of the preceding claims, further comprising providing at least one of said third event reminder data at a third event reminder time and said second event reminder data at a second event reminder time at an output device (128) associated with said computing device (101), said output device (128) controlled by said processing unit (122).

8. The method of any of the preceding claims, further comprising storing said third event reminder data in said database (105).

9. The method of any of the preceding claims, wherein said database (105) is stored in a memory device associated with said computing device (101).

10. The method of any of the preceding claims, further comprising adjusting at least one of said third event reminder data and said second event reminder data based on at least one of a current location and traffic patterns.

11. The method of claim 10, wherein said current location is determined using at least one of a locating device for locating said computing device (101), a GPS (Global Positioning System) device (127), and wireless network triangulation.

12. A computing device (101) for adjusting reminder data stored in a database (105) comprising first event data representative of a first event and second event data representative of a second event occurring after said first event, said first event data associated with first location data, and said second event data associated with second location data and second event reminder data stored in said database (105), the computing device (101) comprising,
a processing unit (122) interconnected with an output device (128), a memory device, and a communication interface (124), said processing unit (122) enabled to implement any of the steps of the method of claims 1 to 11.

13. A computer program product, comprising a computer usable medium having a computer readable program code adapted to be executed to implement any of the steps of the method of claims 1 to 11.
